# EUROPÄISCHE PATENTSCHRIFT

(11) **EP 1 117 548 B1**
(45) Veröffentlichungstag und Bekanntmachung des Hinweises auf die Patenterteilung: **26.11.2003**
(21) Anmeldenummer: 99950542.3
(22) Anmeldetag: 23.09.1999
(51) Int. Cl.: B60G 17/033, B60G 21/073

(54) **HYDROPNEUMATISCHES FEDERUNGSSYSTEM**
HYDROPNEUMATIC SUSPENSION SYSTEM
SYSTEME DE SUSPENSION HYDROPNEUMATIQUE

(30) Priorität: 29.09.1998 DE 19844493
(43) Veröffentlichungstag der Anmeldung: 25.07.2001
(73) Patentinhaber: ZF Lenksysteme GmbH, 73522 Schwäbisch Gmünd (DE)
(72) Erfinder: ELSER, Dieter, D-73547 Essingen (DE); BRAUN, Andreas, D-73529 Schwäbisch Gmünd (DE); HEINTSCHEL, Manfred, D-73525 Schwäbisch Gmünd (DE); ZEITZ, Wolfgang, D-73527 Schwäbisch Gmünd (DE)
(86) Internationale Anmeldenummer: EP9907073
(87) Internationale Veröffentlichungsnummer: WO00018597

(56) Entgegenhaltungen:
- EP-A- 0 321 310
- WO-A-90/10551
- DE-A- 2 431 027
- DE-A- 4 003 493
- DE-A- 19 521 747
- FR-A- 2 761 008
- US-A- 3 917 307

## Beschreibung

Die Erfindung betrifft ein hydropneumatisches Federungssystem für Kraftfahrzeuge nach der im Oberbegriff von Anspruch 1 näher definierten Art.

Solche Systeme sind bekannt aus DE 195 21 747 A1, FR 2 761 008 A1 und der DE 40 03 493 A1.

Hydropneumatische Federungssysteme bieten entscheidende Vorteile in Hinblick auf Robustheit, Federungskomfort sowie schnelle und einfache Regelbarkeit. Die Charakteristik ist allerdings in hohem Maße vom Beladungszustand abhängig. Ein herkömmliches hydropneumatisches Federungssystem besteht aus den Grundelementen Gasdruckspeicher, hydraulische Zylinder und den verbindenden Öldruckleitungen. Anstelle der normalen Blatt-, Luft- oder Schraubenfedern sind Hydraulikzylinder zwischen Achse und Rahmen eingebaut. Diese sind über Leitungen mit Gasdruckspeichern verbunden. Das Gas in jedem Druckspeicher dient als Feder, die Ölsäule im Leitungssystem dient als Übertragungsmedium der Gasfederkräfte auf die Hydraulikzylinder. Die Dämpfung erfolgt im Bereich der Ölsäule durch entsprechende Einrichtungen in Ein- und Ausfederungsrichtung.

In der DE 40 03 493 A1 ist ein hydropneumatisches Federungssystem mit den Fahrzeugrädern zugeordneten hydropneumatischen Abstützaggregaten und einer damit zusammenwirkenden Niveauregulierung beschrieben, welches in Abhängigkeit von der Hubstellung der Räder Hydraulikmedium aus einem Reservoir in die Abstützaggregate einleitet bzw. Hydraulikmedium aus den Abstützaggregaten in das Reservoir abführt.

Um den Leistungsbedarf des Systems gering zu halten, wird ein aktives Bypass- und Förderungssystem zwischen den Abstützorganen angeordnet, welches in Abhängigkeit von der Hubstellung und/oder auf das Fahrzeug einwirkenden Nickoder Wankmomenten Hydraulikmedium unter Umgehung des Reservoirs zwischen einander bezüglich der Fahrzeuglängsachse und/oder der Fahrzeugquerachse gegenüberliegenden Abstützaggregaten zu verschieben gestattet. Bei diesem hydropneumatischen Federungssystem wird also das Hydraulikmedium unmittelbar zwischen den Abstützaggregaten verschiedener Fahrzeugseiten bzw. den vorderen und hinteren Abstützaggregaten verschoben, um eine Fahrzeugseite bei gleichzeitiger Absenkung der anderen Fahrzeugseite anzuheben bzw. das Fahrzeugvorderteil in entsprechender Weise gegenläufig zum Fahrzeugheck zu bewegen.

Nachteilig wirkt sich bei dem Stand der Technik, wie er in der DE 40 03 493 A1 beschrieben ist, vor allem die Tatsache aus, daß mit denselben Zylinderräumen sowohl die hydropneumatische Federung wie auch die Wankstabilisierung realisiert werden soll. Dadurch steht für die hydropneumatische Federung nicht die gesamte Kolbenfläche, sondern nur die Fläche auf der Kolbenstangenseite zur Verfügung. Zudem werden für die Realisierung des Wankausgleichs zusätzliche Aktuatoren benötigt.

Der vorliegenden Erfindung liegt die Aufgabe zugrunde ein hydropneumatisches Federungssystem darzustellen, welches die Funktionen Federung, Wankstabilisierung und Niveauregulierung ohne zusätzliche Regelungseinheit und Aktuatorik bei gleichzeitig reduzierter Teilevielfalt darstellen kann.

Die der Erfindung zugrunde liegende Aufgabe wird durch ein, auch die kennzeichnenden Merkmale des Hauptanspruchs aufweisendes, gattungsgemäßes hydropneumatisches Federungssystem gelöst.

Durch die Trennung von Federungs- und Wankstabilisierungszylinderräumen und das gleichzeitige Integrieren der Wankstabilisierungsaktuatorik in den Federzylindern können die Bauteile in Anzahl und Gewicht deutlich reduziert werden. Zusätzlich kann auf aufwendige Regelungstechnik verzichtet werden.
Ein weiterer Vorteil ist, daß durch das Absenken der Fahrzeuginnenseite zur Wankstabilisierung die Querbeschleunigung reduziert, der Schwerpunkt des Fahrzeugs abgesenkt und somit die Straßenlage des Fahrzeugs verbessert wird.

Die erfindungsgemäße Lösung läßt sich in zumindest vier konstruktiven Varianten realisieren. Bei einer ersten Konstruktionsvariante sind die Druckversorgungen von Federung und Niveauregulierung getrennt, während sie bei einem zweiten Ausführungsbeispiel von einer zentralen Pumpe versorgt werden. Die dritte und die vierte Ausführungsform zeigen ein getrenntes System für Vorder- und Hinterachse, bei denen die Achsen unabhängig voneinander geregelt werden können.

Vorteilhafte und zweckmäßige Ausgestaltungen der Erfindung sind in den Unteransprüchen angegeben.

Nachfolgend sind anhand der Zeichnungen verschiedenen Ausführungsbeispiele der vorliegenden Erfindung prinzipgemäß beschrieben.
Es zeigen:
- Fig. 1: ein erstes Ausführungsbeispiel eines hydropneumatischen Federungssystems für ein zweiachsiges Kraftfahrzeug mit getrennter Druckversorgung für Federung und Niveauregulierung;
- Fig. 2: ein zweites Ausführungsbeispiel eines hydropneumatischen Federungssystems, bei dem die Federung und die Niveauregulierung von einer zentralen Pumpe versorgt werden;
- Fig. 3: ein weiteres Ausführungsbeispiel eines hydropneumatischen Federungssystems, bei dem die Vorderachse unabhängig von der Hinterachse geregelt werden kann und
- Fig. 4: eine vereinfachte Variante eines hydropneumatischen Federungssystems, bei dem durch Reduzierung der Teilevielfalt auch die Funktionsvielfalt verringert wird.

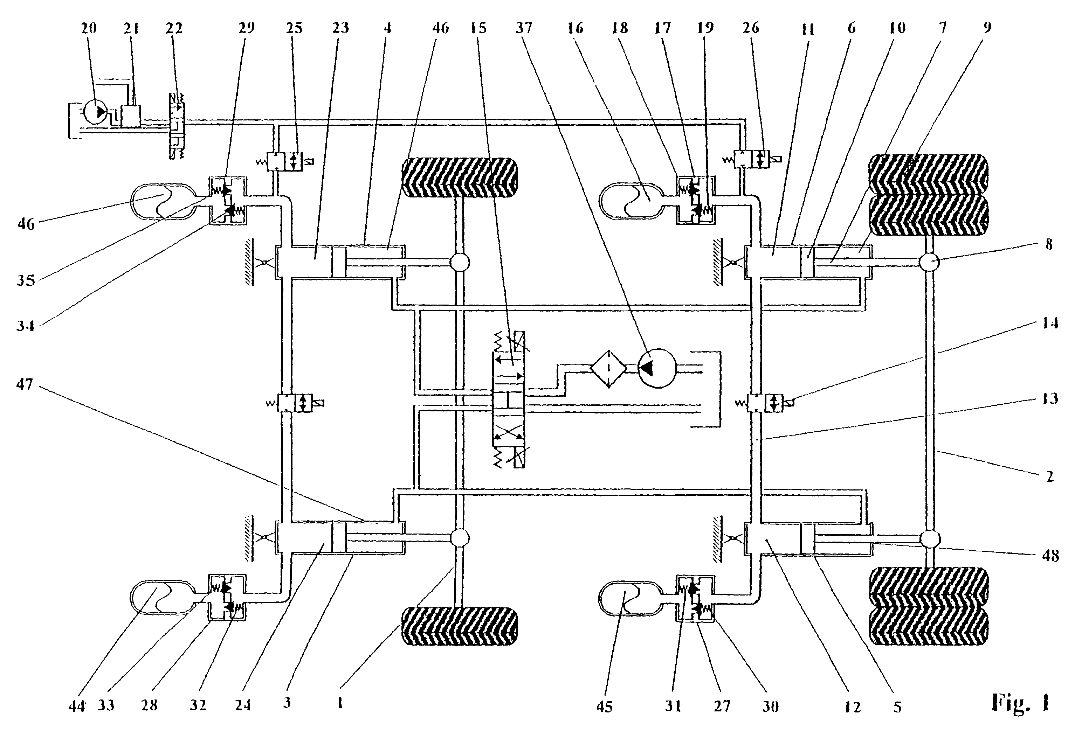

In der Fig. 1 ist als eine erste vorteilhafte Ausführungsform der Erfindung das Gesamtsystem eines zweiachsigen Fahrzeuges dargestellt. Die Vorderachse 1 weist wie die Hinterachse 2 ein hydropneumatisches Federungssystem, bestehend aus zwei Kolben-Zylinder-Einheiten mit jeweils zwei Kammern, nachfolgend Federzylinder genannt, auf. Die Federzylinder 3 und 4 der Vorderachse 1 und die Federzylinder 5 und 6 der Hinterachse 2 sind baugleich und entsprechend der jeweiligen Achslast dimensioniert. Die Funktion der Federzylinder 3, 4, 5, 6 wird anhand des Federzylinders 6 der Hinterachse 2 erläutert. Die Kolbenstange 7 ist über ein Gelenk 8 mit der Hinterachse 2 verbunden. Im unteren Federzylinderraum 9 wirkt der Steuerdruck des Wankstabilisierungssystems. Über dem Kolben 10 wirkt im oberen Federzylinderraum 11 der Druck des Federungs- und Niveauregulierungssystems. Der obere Federzylinderraum 11 ist mit dem korrespondierenden oberen Federzylinderraum 12 des gegenüberliegenden Federzylinders 5 der Hinterachse 2 über eine Rohrleitung 13 verbunden. In der Rohrleitung 13 ist ein Schaltventil 14 angeordnet, welches bei aktiver Wankstabilisierung geöffnet ist.

Beim Auftritt eines Fehlers im Wankstabilisierungssystem wird aus Sicherheitsgründen das Schaltventil 14 stromlos gesteuert und damit die Schließstellung erreicht. In diesem Falle wird auch das Steuerventil 15 stromlos geschaltet und über eine integrierte, mechanische Zentrierung auf neutrale Offenstellung gebracht. In dieser Situation sind die oberen Federzylinderäume 11 und 12 voneinander getrennt und wirken dadurch wie ein Stabilisator.
Zwischen dem oberen Federzylinderraum 11 und einem Druckspeicher 16 ist ein Dämpfungsventil 17 angeordnet, welches durch die beiden in unterschiedlicher Richtung wirkenden Drosseleinrichtungen 18 und 19 in jeweils angepaßter Intensität die Dämpfung des Federvorganges regelt. Die Niveauregulierung erfolgt durch Veränderung des Ölvolumens in der Federungshydraulik. Hierfür wird durch eine Pumpe 20, welche über ein Stromteilventil 21 und ein Steuerventil 22 Öl in das Federungssystem, d. h. in die oberen Federzylinderräume 11, 12, 23, 24, über die Schaltventile 25 und 26 gepumpt.
Je nach Achslast können unterschiedliche Drücke über das Schaltventil 25 den oberen Federzylinderräumen 23 und 24 der Vorderachse 1 und über das Schaltventil 26 den oberen Federzylinderräumen 11 und 12 der Hinterachse 2 zugeführt werden. Die Schaltventile 25 und 26 werden für die Befüllung und Entleerung der Federzylinderräume 11, 12, 23 und 24 im Wechsel geschaltet.

In einer erweiterten Funktionsvariante sind die Dämpfungsventile 17, 27, 28, 29 steuerbar ausgeführt. So kann auch, beispielsweise durch elektromagnetische Kraftbeeinflussung der Drosseleinrichtungen 18, 19, 30 und 31 sowie 32, 33, 34 und 35, die Dämpfungscharakteristik der Federzylinder 3, 4, 5, und 6 achslastabhängig variiert werden.

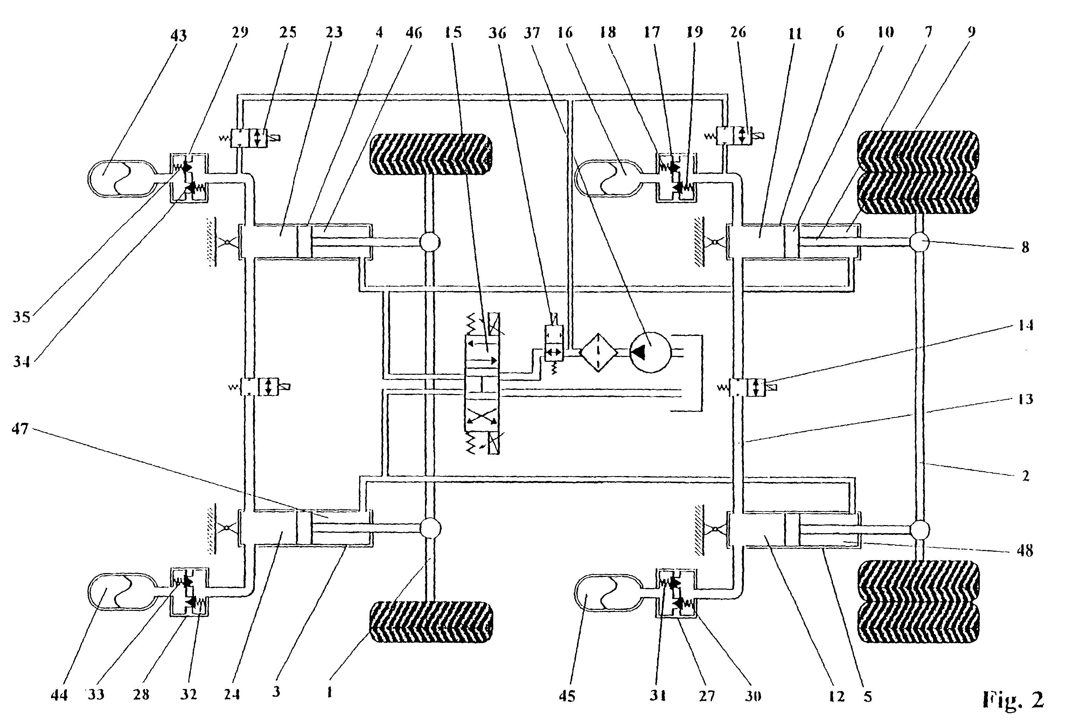

Bei dem in Fig. 2 dargestellten hydropneumatischen Federungssystem wird die Ölversorgung des Gesamtsystems, bestehend aus Federung, Niveauregulierung und Wankstabilisierung, ausschließlich von einer Pumpe 37 bewerkstelligt.

Zusätzlich wird ein Ventil 36 benötigt, welches bei offener Stellung die Wankstabilisierung versorgt und bei geschlossener Stellung die Niveauregulierung steuert, indem die Schaltventile 25 und 26 aktiviert werden. Das Stromteilventil 21, das Steuerventil 22 und die Pumpe 20, die in dem hydropneumatischen Federungssystem nach Fig. 1 dargestellt sind, werden bei dieser Anordnung nicht benötigt. Die leistungsmäßig große Pumpe 37, wie sie für die Wankstabilisierung erforderlich ist, bietet den zusätzlichen Vorteil, daß bei Fahrzeugstillstand die Niveauregulierung in kürzester Zeit vollzogen werden kann. Bei Verwendung einer zentralen Pumpe 37 für alle Funktionen muß diese zwar etwas größer dimensioniert sein, aber man kann somit auf eine Pumpe und einen Ölbehälter verzichten.

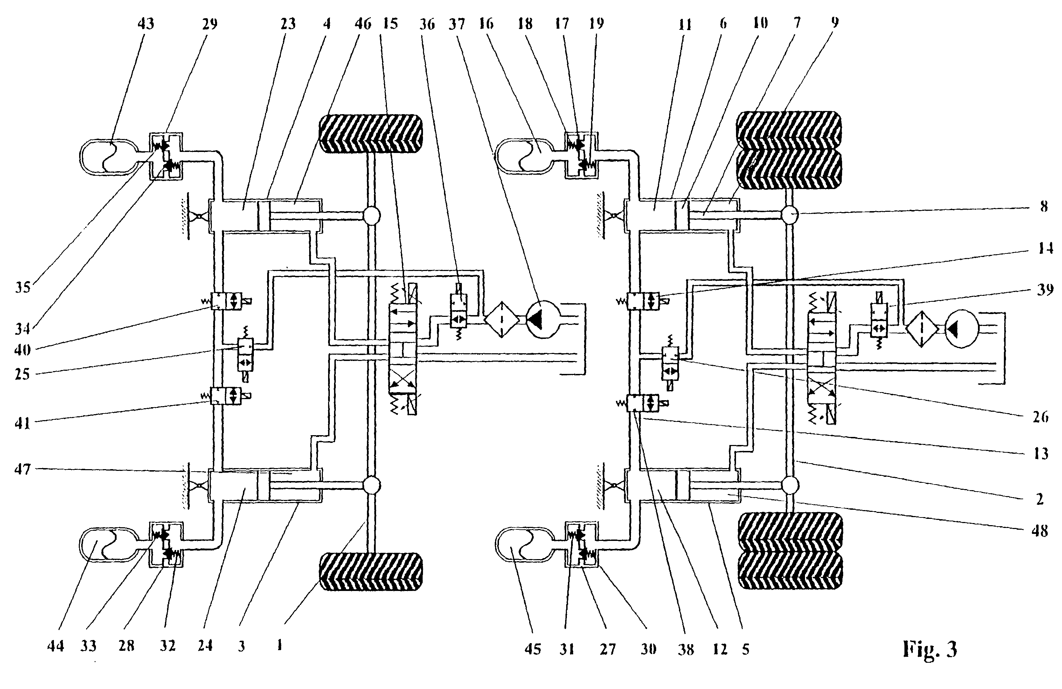

Bei der in Fig. 3 dargestellten Ausführungsform der Erfindung besteht der wesentliche Unterschied zu Fig. 2 in der Auftrennung des Gesamtsystems in zwei voneinander unabhängige Systeme für die Vorderachse 1 und die Hinterachse 2. Somit kann jede Achse unabhängig geregelt werden und man kann trotz gleicher Federzylindergröße vorn und hinten unterschiedliche Druckverhältnisse entsprechend den Achslasten bzw. den Beladungszuständen einstellen. Über die Schaltventile 14, 26 und 38 bzw. 25, 38 und 39 besteht neben der Niveauregulierung noch die Möglichkeit für das sogenannte "Kneeling". Dabei kann das Fahrzeug zur Erleichterung des Einstiegs beidseitig um die Fahrzeuglängsachse gekippt werden, was z. B. für Stadtbusse besonders interessant ist.

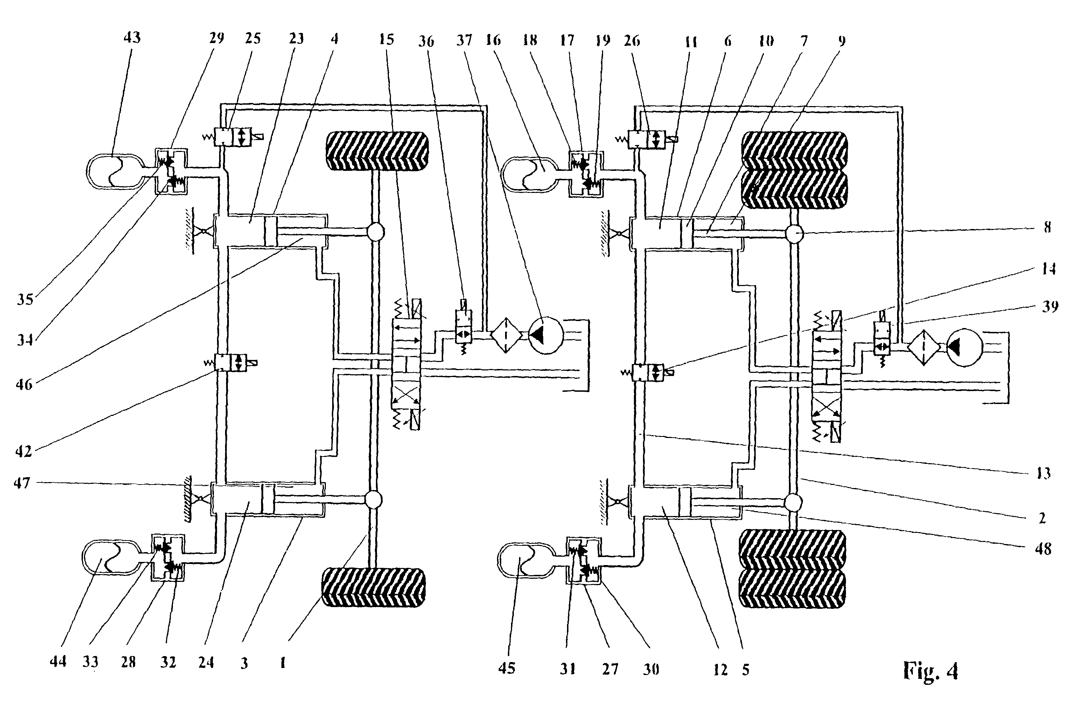

Fig. 4 zeigt eine vereinfachte Variante des in Fig. 3 dargestellten hydropneumatischen Federungssystems, bei dem durch die Verwendung der Schaltventile 14, 25, 26 und 42 nur ein einseitiges Kneeling dargestellt werden kann.

### Bezugszeichen

- 1: Vorderachse
- 2: Hinterachse
- 3: Federzylinder
- 4: Federzylinder
- 5: Federzylinder
- 6: Federzylinder
- 7: Kolbenstange
- 8: Gelenk
- 9: unterer Federzylinderraum
- 10: Kolben
- 11: oberer Federzylinderraum
- 12: oberer Federzylinderraum
- 13: Rohrleitung
- 14: Schaltventil
- 15: Steuerventil
- 16: Druckspeicher
- 17: Dämpfungsventil
- 18: Drosseleinrichtung
- 19: Drosseleinrichtung
- 20: Pumpe
- 21: Stromteilventil
- 22: Steuerventil
- 23: oberer Federzylinderraum
- 24: oberer Federzylinderraum
- 25: Schaltventil
- 26: Schaltventil
- 27: Dämpfungsventil
- 28: Dämpfungsventil
- 29: Dämpfungsventil
- 30: Drosseleinrichtung
- 31: Drosseleinrichtung
- 32: Drosseleinrichtung
- 33: Drosseleinrichtung
- 34: Drosseleinrichtung
- 35: Drosseleinrichtung
- 36: Ventil
- 37: Pumpe
- 38: Schaltventil
- 39: Schaltventil
- 40: Schaltventil
- 41: Schaltventil
- 42: Schaltventil
- 43: Druckspeicher
- 44: Druckspeicher
- 45: Druckspeicher
- 46: unterer Federzylinderraum
- 47: unterer Federzylinderraum
- 48: unterer Federzylinderraum

## Patentansprüche

1. Hydropneumatisches Federungssystem für Kraftfahrzeuge, mit mindestens einem im wesentlichen aus mindestens einem, obere (11, 12, 23, 24) und untere Federzylinderräume (9, 46, 47, 48) aufweisenden hydropneumatischen Federzylinder (3, 4, 5, 6), mindestens einem hydropneumatischen Druckspeicher (16, 43, 44, 45) und mindestens aus einem Dämpfungsventil (17, 27, 28, 29) bestehenden hydropneumatischen Abstützaggregat und einer damit zusammenwirkenden Niveauregulierung, welche in Abhängigkeit von der Hubstellung der Räder Hydraulikmedium aus dem hydropneumatischen Druckspeicher (16, 43, 44, 45) in die hydropneumatischen Federzylinder (3, 4, 5, 6) einleitet bzw. Hydraulikmedium aus den hydropneumatischen Federzylindern (3, 4, 5, 6) in die Druckspeicher (16, 43, 44, 45) abführt, wobei die hydropneumatischen Federzylinder (3, 4, 5, 6) die Funktionen Federung, Niveauregulierung und Wankstabilisierung realisieren können,
**dadurch gekennzeichnet, daß** die oberen Federzylinderräume (11, 12, 23, 24) zur hydropneumatischen Federung und Niveauregulierung und die unteren Federzylinderräume (9, 46, 47, 48) für die Wankstabilisierung verwendet werden.

2. Hydropneumatisches Federungssystem nach Anspruch 1, **dadurch gekennzeichnet, daß** die Wankstabilisierung durch Absenken der kurveninneren Fahrzeugseite erfolgt.

3. Hydropneumatisches Federungssystem nach Anspruch 1, **dadurch gekennzeichnet, daß** die Dämpfungsventile ( 17, 27, 28, 29 ) steuerbar ausgeführt sind.

4. Hydropneumatisches Federungssystem nach Anspruch 1, **dadurch gekennzeichnet, daß** die Dämpfungscharakteristik der Federzylinder ( 3, 4, 5 ,6 ) achslastabhängig eingestellt werden kann.

## Claims

1. Hydropneumatic suspension system for motor vehicles, with at least one hydropneumatic support assembly made up essentially of at least one hydropneumatic suspension cylinder (3, 4, 5, 6), having upper (11, 12, 23, 24) and lower suspension cylinder spaces (9, 46, 47, 48), of at least one hydropneumatic pressure reservoir (16, 43, 44, 45), and of at least one damping valve (17, 27, 28, 29), and with an automatic level control system cooperating with the assembly, the automatic level control system, as a function of the lift position of the wheels, sending hydraulic fluid from the hydropneumatic pressure reservoir (16, 43, 44, 45) into the hydropneumatic suspension cylinders (3, 4, 5, 6), or drawing hydraulic fluid from the hydropneumatic suspension cylinders (3, 4, 5, 6) into the pressure reservoirs (16, 43, 44, 45), it being possible for the hydropneumatic suspension cylinders (3, 4, 5, 6) to carry out the functions of suspension, automatic level control, and roll stabilization, **characterized in that** the upper suspension cylinder spaces (11, 12, 23, 24) are used for the hydropneumatic suspension and the automatic level control, and the lower suspension cylinder spaces (9, 46, 47, 48) are used for the roll stabilization.

2. Hydropneumatic suspension system according to Claim 1, **characterized in that** the roll stabilization is carried out by lowering the inner vehicle side in cornering.

3. Hydropneumatic suspension system according to Claim 1, **characterized in that** the damping valves (17, 27, 28, 29) are designed so as to be controllable.

4. Hydropneumatic suspension system according to Claim 1, **characterized in that** the damping characteristics of the suspension cylinders (3, 4, 5, 6) can be set in accordance with the axle load.

## Revendications

1. Système de suspension hydropneumatique pour véhicules automobiles, comprenant au moins un cylindre à ressort hydropneumatique (3, 4, 5, 6) présentant des espaces de cylindre à ressort supérieurs (11, 12, 23, 24) et inférieurs (9, 46, 47, 48), au moins un accumulateur de pression hydropneumatique (16, 43, 44, 45) et au moins une unité de support hydropneumatique se composant d'une soupape d'amortissement (17, 27, 28, 29) et une régulation de niveau coopérant avec elle, qui, en fonction de la position de levage des roues, introduit du fluide hydraulique hors de l'accumulateur de pression hydropneumatique (16, 43, 44, 45) dans les cylindres à ressort hydropneumatiques (3, 4, 5, 6) ou évacue du fluide hydraulique hors des cylindres à ressort hydropneumatiques (3, 4, 5, 6) dans l'accumulateur de pression (16, 43, 44, 45), les cylindres à ressort hydropneumatiques (3, 4, 5, 6) pouvant réaliser les fonctions de suspension, régulation de niveau et stabilité au roulis,
**caractérisé en ce que** les espaces de cylindre à ressort supérieurs (11, 12, 23, 24) sont utilisés pour la suspension hydropneumatique et la régulation de niveau et les espaces de cylindre à ressort inférieurs (9, 46, 47, 48) sont utilisés pour la stabilité au roulis.

2. Système de suspension hydropneumatique selon la revendication 1, **caractérisé en ce que** la stabilité au roulis est réalisée par un abaissement du côté du véhicule intérieur à la courbe.

3. Système de suspension hydropneumatique selon la revendication 1, **caractérisé en ce que** les soupapes d'amortissement (17, 27, 28, 29) sont réalisées de manière commandable.

4. Système de suspension hydropneumatique selon la revendication 1, **caractérisé en ce que** la caractéristique d'amortissement des cylindres à ressort (3, 4, 5, 6) peut être ajustée en fonction de la charge à l'essieu.
